Europäisches Patentamt

European Patent Office

Office européen des brevets

(19)

(11) Veröffentlichungsnummer: **0 272 524 B1**

(12) # EUROPÄISCHE PATENTSCHRIFT

(45) Veröffentlichungstag der Patentschrift: **02.09.92**

(51) Int. Cl.⁵: **C09D 167/00**

(21) Anmeldenummer: **87118048.5**

(22) Anmeldetag: **07.12.87**

(54) **Verfahren zur Herstellung von wasserverdünnbaren Lackbindemitteln.**

(30) Priorität: **23.12.86 AT 3414/86**

(43) Veröffentlichungstag der Anmeldung:
**29.06.88 Patentblatt 88/26**

(45) Bekanntmachung des Hinweises auf die
Patenterteilung:
**02.09.92 Patentblatt 92/36**

(84) Benannte Vertragsstaaten:
**BE CH DE ES FR GB IT LI NL SE**

(56) Entgegenhaltungen:
**FR-A- 2 245 743**
**FR-A- 2 549 078**
**GB-A- 1 227 443**

(73) Patentinhaber: **VIANOVA KUNSTHARZ AKTIEN-
GESELLSCHAFT**
**Postfach 191 Leechgasse 21**
**A-8011 Graz(AT)**

(72) Erfinder: **Staritzbichler, Werner, Dr.**
**Im Hoffeld 6**
**A-8046 Graz(AT)**
Erfinder: **Dworak, Gert, Dr.**
**Dr. Robert Grafstrasse 25**
**A-8010 Graz(AT)**
Erfinder: **Paar, Willibald, Dr.**
**Schanzelgasse 19**
**A-8010 Graz(AT)**

EP 0 272 524 B1

**Beschreibung**

Die Erfindung betrifft ein Verfahren zur Herstellung von wasserverdünnbaren Lackbindemitteln auf der Basis von Kombinationen einer wasserlöslichen Maleinatölkomponente und einer unter den üblichen Bedingungen wasserunlöslichen, modifizierte Harnstoffgruppen und Urethangruppen aufweisenden Polyhydroxylverbindung. Die Produkte zeigen gegenüber den Produkten des Standes der Technik eine wesentlich verbesserte Haftfestigkeit, sowohl gegenüber dem Untergrund, also einem metallischen Substrat oder einer Grundierung, als auch gegenüber Folgeschichten.

Aus der AT-PS 328 587 ist ein Verfahren zur Herstellung von wäßrigen, ofentrocknenden Bindemitteln bekannt, bei welchem eine wasserunlösliche filmbildende Polyhydroxylverbindung (PH) und eine filmbildende Polycarboxylverbindung (PC) gemischt oder partiell kondensiert und anschließend mit organischen Basen unter Salzbildung in den wasserlöslichen Zustand übergeführt werden. Die Produkte werden in Kombination mit Vernetzungskomponenten, wie Aminoharzen, verarbeitet. Obwohl diese Bindemittel wegen Fehlens des bei lösungsmittelarmen Systemen auf Ammoniak- oder Aminsalzbasis auftretenden anomalen Viskositätsverhaltens ausgezeichnete anwendungstechnische Eigenschaften zeigen und Überzüge mit hervorragenden Eigenschaften ergeben, treten bei der Verwendung dieses Bindemitteltyps für wasserverdünnbare Grundierungen und insbesonders bei Verwendung als Bindemittel für Füllermaterialien Schwierigkeiten bei der Zwischenschichthaftung auf.

Als Füller wird bekanntlich die auf eine Grundierung, die gegebenenfalls durch Electroabscheidung erhalten wurde, aufgebrachte Schicht bezeichnet. Sie dient vor dem Auftrag des Decklackes als Zwischenschicht, durch welche Fehler in der Grundierung ausgeglichen werden können und die für den nachfolgenden Decklack eine entsprechende Basis darstellen soll. Dieser Lackaufbau wird insbesonders in den Automobilindustrie bei der Lackierung von Personenkraftwagen eingesetzt. Es ist klar, daß diese Zwischenschicht eine ausgewogene Eigenschaftscharakteristik bezüglich Haftung, Härte, Schleifbarkeit, Elastizität u. a. aufweisen muß.

Es wurde nun gefunden, daß diese Eigenschaften bei wasserverdünnbaren Lackbindemitteln auf der Basie von Mischungen oder partiellen Kondensationsprodukten wasserlöslicher Polycarboxylverbindungen und wasserunlöslicher Polyhydroxylverbindungen erzielbar sind, wenn eine Maleinatkomponente zumindest anteilig mit einer Harnstoff- und Urethangruppen aufweisenden Polyhydroxylverbindung kombiniert wird.

Die vorliegende Erfindung betrifft demgemäß ein Verfahren zur Herstellung wasserverdünnbarer Lackbindemittel auf der Basis von partiellen Kondensationsprodukten einer nach zumindestens teilweiser Neutralisation der Carboxylgruppen wasserlöslichen Maleinatölkomponente und einer Polyhydroxylkomponente, sowie einer Vernetzungskomponente, vorzugsweise einem Aminoharz, welches dadurch gekennzeichnet ist, daß man

(A) 10 bis 90 Gew.-%, vorzugsweise 18 bis 40 Gew.-%, eines oder mehrerer Anlagerungsprodukte von Maleinsäure(anhydrid) an ungesättigte Öle und/oder Fettsäuren, deren Maleinsäure(anhydrid)anteil zwischen 10 und 30 Mol-%, vorzugsweise zwischen 16 und 27 Mol-% liegt und deren Anhydridgruppen mit Wasser und/oder Monoalkoholen aufgeschlossen sind, mit

(B) 90 bis 10 Gew.-%, vorzugsweise 82 bis 60 Gew.-%, einer oder mehrerer wasserunlöslicher, filmbildender Polyhydroxylverbindungen, die zumindestens 30 % aus vorzugsweise fettsäuremodifizierten Polykondensations- und/oder Polyadditionsprodukten (Komponente $B_1$), welche pro 1000 g mindestens 0,5 Mol einer substituierten Harnstoffgruppe (-N-CO-N-), sowie Urethangruppen enthalten und eine Säurezahl von weniger als 5 mg KOH/g, eine Hydroxylzahl von 50 bis 300 mg KOH/g und eine Grenzviskositätszahl von 8 bis 13 ml/g, gemessen in NN-Dimethylformamid (DMF) bei 20 Grad C aufweisen, und bis maximal 70 Gew.-% aus Polyhydroxylverbindungen (Komponente $B_2$), welche vorzugsweise, mit Ausnahme der Anwesenheit von substituierten Harnstoffgruppen der Komponente (B) entsprechen, bestehen,

bei 90 bis 150 Grad C bis zu einer Grenzviskositätszahl (DMF/20 Grad C) zwischen 10 und 20 ml/g kondensiert, mit der Maßgabe, daß das Verhältnis der Grenzviskositätszahlen der Polyhydroxylkomponenten und derPolycarboxylkomponenten zwischen 1,4 und 2,7 liegt und das Endprodukt mindestens 0,3 Mol an substituierten Harnstoffgruppen aufweist.

Die Erfindung betrifft weiters die Verwendung der so hergestellten Kunstharzbindemittel zur Formulierung von wasserverdünnbaren Lacken, insbesonders von Grundierungen und Füllern (Primer Surfacer).

Die filmbildende,nach Neutralisation wasserlösliche Polycarboxylverbindung (Komponente A) kann als makromolekularer Emulgator aufgefaßt werden, der nach der Vernetzung des Überzuges als integrierender Bestandteil am Filmaufbau beteiligt ist. Geeignete Ausgangsmaterialien für die filmbildenden Polycarboxylverbindungen, welche eine Säurezahl von 50 bis 280 mg KOH/g aufweisen, sind für die vorliegende Erfindung Additionsprodukte von Maleinsäure(anhydrid) an ungesättigte Fettsäuren, wie sie in den natürlichen Ölen und deren Abkömmlingen vorkommen, sowie die analogen Additionsprodukte an solche Öle. Die Fettsäuren weisen eine Jodzahl von mindestens 110 auf und enthalten vorzugsweise zum überwiegenden Teil isolierte Doppelbindungen. Ebenso können auch die handelsüblichen niedermolekularen flüssigen Dien-(co)-polymeren, vor allem Polybutadiene als Additionspartner herangezogen werden.

Die Anhydridgruppierungen dieser Additionsprodukte werden für das erfindungsgemäße Verfahren in bekannter Weise entweder durch Wasser oder einwertige Alkohole aufgespalten. Die eingesetzten Polycarboxylverbindungen weisen vorzugsweise eine Grenzviskositätszahl zwischen 4 und 8 ml/g (DMF, 20 Grad C) auf.

Als Polyhydroxylverbindungen (Komponente ($B_1$) und ($B_2$) werden wasserunlösliche, filmbildende Polymere eingesetzt, die durch die praktisch vollständige Abwesenheit von freien Carboxylgruppen gekennzeichnet sind, d.h. daß sie eine Säurezahl von weniger als 5 mg KOH/g aufweisen. Ihre Hydroxylzahl liegt zwischen 50 und 300 mg KOH/g.

Die Polyhydroxylverbindungen der Komponente ($B_1$) und ($B_2$) werden z. B. in bekannter Weise durch Kondensation von Polyolen , wie Monoäthylenglykol, Diäthylenglykol, Triäthylenglykol, Glycerin, Trimethylolpropan, Pentaerythrit, mit Polycarbonsäuren oder deren Anhydriden wie o-Phthalsäure, Terephthalsäure, Trimellithsäure, Bernsteinsäure, Adipinsäure, Sebacinsäure usw., gegebenenfalls unter anteiliger Mitverwendung von Monocarbonsäuren mit 5 bis 20 Kohlenstoffatomen, hergestellt, wobei die Polyole im stöchiometrischen Überschuß eingesetzt werden.

Als wesentliche Gruppen enthalten die Polyhydroxylverbindungen der Komponente ($B_1$) pro 1000 g mindestens 0,5 Mol einer substituierten Harnstoffgruppe, welche durch die Formel -N-CO-N- dargestellt werden kann. Daneben weist diese Komponente Urethangruppen auf.

Die Harnstoffgruppen werden durch anteilige Verwendung von sekundären Alkanolaminen, wie Dialkanolaminen und Alkanolalkylaminen, und anschließende Umsetzung der sekundären Aminogruppe mit Mono-, Di- oder Polyisocyanaten erhalten. Die geforderten Urethangruppen entstehen bei der anteiligen Reaktion der Isocyanatverbindungen mit einem Teil der Hydroxylgruppen der PHV. Durch diese Reaktionen wird auch die für diese Komponente geforderte Grenzviskositätszahl von 8 bis 13 ml/g (DMF/20 Grad C) erreicht.

In einer besonderen Ausführungsform werden als Komponente ($B_1$) geeignete Polymere durch gemeinsame Reaktion von Epoxid-Aminadduktverbindungen, Alkanolaminen, Polyisocyanatverbindungen und gegebenenfalls Polyolen hergestellt. Dabei können als Epoxidverbindungen sowohl Monoepoxidverbindungen, wie die handelsüblichen Glycidylester von KOCH-Säuren, z. B. der alpha,alpha-Dimethyl-$C_9$-$C_{11}$-monocarbonsäuren, als auch Diglycidylverbindungen, wie die Epoxidharze auf Basis von Diolen oder Bisphenolen, eingesetzt werden. Zur Erzielung der notwendigen Hydroxylzahl werden die Epoxidverbindungen vorzugsweise mit Dialkanolaminen umgesetzt. Als Polyole können auch entsprechende Präpolymere aus Diisocyanaten mit Diolen, Polyolen oder Alkanolaminen verwendet werden.

Die Alkanolamine bzw. Polyole und die Epoxidharz-Aminaddukte werden dabei in einem Verhältnis von 70 : 30 bis 30 : 70 eingesetzt. Durch die Reaktion mit dem Polyisocyanat wird die gewünschte Grenzviskositätszahl erreicht. Als Polyisocyanate werden die üblichen Diisocyanate oder Präpolymere mit freien NCO-Gruppen mit Polyolen, z. B. Trimethylolpropan eingesetzt.

Gleichfalls geeignete Polyhydroxylverbindungen, welche vorzugsweise als Komponente ($B_2$) eingesetzt werden, erhält man durch Copolymerisation alpha, $\beta$-äthylenisch ungesättigter Verbindungen, die freie Hydroxylgruppen tragen, wie Äthylenglykolmono(meth)acrylsäureester, mit anderen copolymerisationsfähigen Vinylverbindungen, wie Estern der Acryl- bzw. Methacrylsäure von einwertigen Alkoholen, Amiden der Acryl- bzw. Methacrylsäure, Styrol, Vinyltoluol und anderen Monomeren, soweit sie keine Carboxylgruppen tragen. Die Copolymerisate können auch geringe Mengen von Formaldehydkondensaten von Melamin, Harnstoff, Benzoguanamin, usw. einkondensiert enthalten.

Für oxidativ lufttrocknende Bindemittel ist, wie dem Fachmann bekannt ist, ein ausreichender Anteil an ungesättigten Fettsäureresten im System notwendig. Für erfindungsgemäß hergestellte Bindemittel, welche für lufttrocknende Lacke eingesetzt werden, soll dieser Anteil in der PH-Komponente nicht unter 30 % (Öllänge) liegen.

Für die erfindungsgemäße Herstellung der Bindemittel werden die Komponenten in einem Verhältnis von 10 bis 90 Gew.-% Polycarboxylkomponente (A) zu 90 bis 10 Gew.-% Polyhydroxylkomponente ($B_1$ + $B_2$) bei 90 bis 150 Grad C kondensiert. Vorzugsweise werden die Komponenten in einem Verhältnis von 18 bis 40 Gew.-% (A) : 82 bis 60 Gew.-% ($B_1$ + $B_2$) eingesetzt. Das Verhältnis der Grenzviskositätszahlen der Ausgangskomponenten soll vorteilhafterweise einem Quotienten PH/PC zwischen 1,4 und 2,7 entsprechen. Die Endprodukte müssen pro 1000 g mindestens 0,3 Mol der substituierten Harnstoffgruppen enthalten.

Die partielle Kondensation wird bis zu einer Grenzviskositätszahl von 10 bis 20, vorzugsweise von 14 bis 18 ml/g (gemessen in DMF, 20 Grad C) geführt. Die Kondensationsreaktion wird anhand der Säurezahl , der Viskosität und der Wasserverdünnbarkeit des Reaktionsproduktes verfolgt, wobei im Verlauf der Reaktion eine Abnahme der Säurezahl um bis zu 20 Einheiten erfolgt.

Die erfindungsgemäß hergestellen Kombinationsprodukte sind mit Wasser weitestgehend verdünnbar, wobei die wasserunlösliche Komponente PH durch die wasserlösliche makromolekulare Komponente PC in der Lösung stabilisiert wird. In einigen besonders bevorzugten Fällen sind die durch Wasserzusatz erzeugten Dispersionen oder Emulsionen im Verarbeitungszustand optisch klar und trüben sich erst bei viel stärkerer Verdünnung, die allerdings für den Verarbeitungszweck unnötig ist. Es ist darüberhinaus ein wesentliches Kennzeichen der erfindungsgemäßen Überzugsmittel, daß sie nach Verdunsten des Wassers und eventuell vorhandener Hilfslösungsmittel einen klaren Film ergeben.

Die erfindungsgemäß hergestellten Überzugsmittel können als Klarlack oder in pigmentierter Form aufgebracht werden. Als Vernetzungskomponente werden wassertolerante Aminoharze oder Phenolharze verwendet. Vorzugsweise werden Melamin-Formaldehydkondensate vom Typ des Hexamethoxymethylmelamins eingesetzt.Zur Pigmentierung eignen sich die üblichen Pigmente, Farbstoffe und Füllstoffe, beispielsweise Titandioxid, Eisenoxid, Ruß, Silikatpigmente, Lithopone, Phthalocyaninfarbstoffe u. a. Die Überzugsmittel können auch Hilsstoffe zur Pigmentbenetzung, gegen Ausschwimmerscheinungen, Schaumbildung, Hautbildung oder Oberflächenstörungen enthalten. Übliche Additive sind auch Silikone zur Erhöhung der Kratzfestigkeit oder zur Erzielung besonderer Oberflächeneffekte.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1 :

PH-Komponente:

In einem geeigneten Reaktionsgefäß werden 105 g (1 Mol) Diethanolamin auf 80 Grad C erwärmt und portionsweise mit 250 g (1 Mol) eines handelsüblichen Glycidylestergemisches aus alpha,alpha-Dimethyl-$C_9$-$C_{11}$-mono-carbonsäuren versetzt. Die Temperatur wird bis zum vollständigen Umsatz der Oxirangruppen gehalten.

532 g (1,5 Mol) dieses Reaktionsproduktes, 53 g (0,5 Mol) Diethanolamin und 382 g Methylethylketon werden auf 75 Grad C erwärmt. Dann werden 300 g Toluylendiisocyanat gleichmäßig zugetropft und die Temperatur gehalten, bis der NCO-Wert auf 0 gesunken ist und eine Grenzviskositätszahl (DMF, 20 Grad C) zwischen 10,5 und 11 ml/g erreicht ist. Liegt die Grenzviskositätszahl bei einem NCO-Wert von 0 unter 10,5 ml/g, wird der Ansatz mit weiterem Toluylendiisocyanat in kleinen Portionen versetzt, bis der gewünschte Wert erreicht ist.

Anschließend wird der Ansatz mit 226 g Methoxypropoxypropanol verdünnt und das Methylethylketon im Vakuum abgezogen, bis ein Festkörpergehalt von 80 % erreicht ist. Das Produkt weist eine Hydroxylzahl von 130 mg KOH/g auf.

PC-Komponente:

165 g dehydratisiertes Rizinusöl und 135 g Leinöl werden gemeinsam 1 Stunde bei 250 Grad C umgeestert und dann mit 100 g Maleinsäureanhydrid bei 200 Grad C so lange umgesetzt bis das Maleinsäureanhydrid praktisch vollständig gebunden ist. Nach Kühlen auf 90 Grad C wird eine Mischung von 30 g deionisertem Wasser und 3 g Triethylamin zugegeben und die Anhydridgruppen bei 95 bis 100 Grad C aufgeschlossen.

Dann wird der Ansatz mit Methoxypropoxypropanol auf einen Festkörpergehalt von 80 % verdünnt. Das Produkt weist eine Säurezahl von etwa 220 ± 20 mg KOH/g auf.

Erfindungsgemäße Kombination:

1130 g (904 g Festharz) der PH-Komponente und 283 g (226 g Festharz) der PC-Komponente werden bei 110 Grad C so lange kondensiert, bis eine Grenzviskositätszahl von 16,5 ml/g (DMF, 20 Grad C) erreicht ist. Anschließend wird der Ansatz mit 56 g Dimethylethanolamin partiell neutralisiert und mit deionisiertem Wasser auf einen Festkörpergehalt von 33 % verdünnt.

Das Produkt weist einen Anteil an substituierten Harstoffgruppen von 0,5 Mol/1000 g Festharz auf und ergibt nach Abdunsten der flüchtigen Anteile einen klaren Film.

Lacktechnische Prüfung:

(a) In einer Perlmühle wird in bekannter Weise eine Pigmentpaste aus 127,3 Tlen der oben beschriebenen 33%igen bindemittellösung, 27 Tlen deionisiertem Wasser, 60 Tlen Titandioxid (Rutiltyp), 60 Tlen Bariumsulfat und 0,2 Tlen Flammruß hergestellt. Die Paste wird mit 181,8 Tlen der 33%igen Bindemittellösung, 18 Tlen eines handelsüblichen Melaminharzes vom Hexamethoxymethylmelamintyp und 12 Tlen deionisiertem Wasser aufgelackt. Der Lack weist einen Festkörergehalt von ca. 50 %, einen pH-Wert von ca. 9 und eine Auslaufzeit gemäß DIN 53211/20 Grad C von ca 30 Sekunden auf.

(b) Vergleichsbeispiel: Analog wie in (a) angegeben wird eine Pigmentpaste aus 134 Tlen eines 75%igen Bindemittels gemäß Beispiel 1 der AT-PS 328 587 (Komp. A: DCO-Leinöl-Addukt; Komp. B$_1$: Polyester aus Triethylenglykol, Phthalsäureanhydrid und Trimethylolpropan; 1 Stunde bei 120 Grad C kondensiert), 88 Tlen Ethylenglykolmonobutylether, 167 Tlen Titandioxid (Rutiltyp), 84 Tlen Bariumsulfat und 0,5 Tlen Flammruß hergestellt. Die Lackpaste wird mit 158 Tlen Harz, 75%ig, 33 Tlen Hexamethoxymethylmelamin, 41 Tlen Ethylenglykolmonobutylether und 209 Tlen deionisiertem Wasser komplettiert. Der Lack weist einen Festkörpergehalt von ca. 55 %, einen pH-Wert von ca. 8 und eine Auslaufzeit gemäß DIN 53 211 von ca. 30 Sekunden auf.

(c) Ergebisse der lacktechnischen Prüfung: Die Lacke werden mit Druckluftpistole auf nicht vorbehandeltes Stahlblech appliziert und bei den in der nachstehenden Tabelle angegebenen Temperaturen eingebrannt. Die Filme weisen eine Trockenfilmstärke von 25 bis 30 $\mu$m auf. Die Ergebnisse sind in der Tabelle zusammengefaßt.

| | Erfg. Bindemittel | | Vergleichsbeispiel | |
|---|---|---|---|---|
| Einbrennbed. 20 min. | 140 C | 160 C | 140 C | 160 C |
| Pendelhärte nach KÖNIG (Sekunden) | 130 | 150 | 150 | 160 |
| Tiefung nach ERICHSEN (mm) | 9 | 8 | 3 | 2 |
| Gitterschnitt DIN 53 151 | GT 0 | GT 0 | GT 2 | GT 3 - 4 |
| Salzsprühtest ASTM B 117/64 240 Stunden Ablösung am Kreuzschnitt in mm | 10-15 | 10 | 30-40 | 30-50 |
| Tropentest 240 Stunden, 40 Grad C Beurteilung nach DIN 50 017 | m0 g0 | m0 g0 | m4 g2 | m2 g2 |

**Patentansprüche**

1. Verfahren zur Herstellung wasserverdünnbarer Lackbindemittel auf der Basis von partiellen Kondensationsprodukten einer nach zumindestens teilweiser Neutralisation der Carboxylgruppen wasserlöslichen Maleinatölkomponente als Polycarboxylkomponente und einer Polyhydroxylkomponente, sowie von einer Vernetzungskomponente, vorzugsweise einem Aminoharz, dadurch gekennzeichnet, daß man

(A) 10 bis 90 Gew.-%, vorzugsweise 18 bis 40 Gew.-%, eines oder mehrerer Anlagerungsprodukte von Maleinsäureanhydrid an ungesättigte Öle und/oder Fettsäuren, deren Maleinsäureanhydridanteil zwischen 10 und 30 Mol-%, vorzugsweise zwischen 16 und 27 Mol-%, liegt und deren Anhydridgruppen mit Wasser und/oder Monoalkoholen aufgeschlossen sind,

mit

(B) 90 bis 10 Gew.-%, vorzugsweise 82 bis 60 Gew.-%, einer oder mehrerer wasserunlöslicher, filmbildender Polyhydroxylverbindungen, bestehend aus mindestens 30 Gew.-% von vorzugsweise fettsäuremodifizierten Polykondensations- und/oder Polyadditionsprodukten (Komponente B1), welche pro 1000 g mindestens 0,5 Mol einer substituierten Harnstoffgruppe (-N-CO-N-) und überdies Urethangruppen enthalten, eine Säurezahl von weniger als 5 mg KOH/g, eine Hydroxylzahl von 50 bis 300 mg KOH/g und eine Grenzviskositätszahl von 8 bis 13 ml/g, gemessen in NN-Dimethylformamid (DMF) bei 20°C, aufweisen, und aus gegebenenfalls bis maximal 70 Gew.-% von Polyhydroxylverbindungen (Komponente B2), welche vorzugsweise, mit Ausnahme der Anwesenheit von substituierten Harnstoffgruppen, der Komponente B1 entsprechen,

bei 90 bis 150°C bis zu einer Grenzviskositätszahl (DMF/20°C) zwischen 10 und 20 ml/g kondensiert, mit der Maßgabe, daß das Verhältnis der Grenzvikositätszahlen der Polyhydroxylkomponenten und der Polycarboxylkomponenten zwischen 1,4 und 2,7 liegt und das Endprodukt mindestens 0,3 Mol an substituierten Harnstoffgruppen aufweist.

**2.** Verfahren nach Anspruch 1, dadurch gekennzeichnet, daß man Maleinatölkomponenten (A) mit einer Grenzviskositätszahl (DMF/20°C) zwischen 4 und 8 ml/g einsetzt.

**3.** Verfahren nach den Ansprüchen 1 und 2, dadurch gekennzeichnet, daß man als Komponente B1 der Polyhydroxylverbindungen gegebenenfalls durch Monocarbonsäuren mit 5 bis 20 Kohlenstoffatomen modifizierte und Hydroxylgruppen aufweisende Polyesterharze einsetzt, die durch die zusätzliche Verwendung von sekundären Alkanolaminen und Isocyanatverbindungen Harnstoff- und Urethangruppen aufweisen.

**4.** Verfahren nach den Ansprüchen 1 und 2, dadurch gekennzeichnet, daß man als Komponente B1 der Polyhydroxylverbindungen Polymere einsetzt, die durch Umsetzung von Epoxid-Aminverbindungen, Alkanolaminen, Polyisocyanatverbindungen und gegebenenfalls Polyolen erhalten werden.

**5.** Verfahren nach den Ansprüchen 1 und 2, dadurch gekennzeichnet, daß man als Komponente B2 der Polyhydroxylverbindungen Copolymerisate aus hydroxylfunktionellen (Meth)acrylmonomeren und anderen Vinyl- und/oder Vinylidenverbindungen einsetzt.

**6.** Verwendung der nach den Ansprüchen 1 bis 5 hergestellten Bindemittel in Kombination mit Phenol- und/oder Aminoharzen als Vernetzungskomponente zur Formulierung von wasserverdünnbaren Lacken, insbesondere von Zwischenschichtlacken (Füllern).

**Claims**

**1.** Process for the preparation of water-thinnable paint binders based on products of the partial condensation of a maleate oil component which is water-soluble after at least partial neutralisation of the carboxyl groups, as the polycarboxyl component, and a polyhydroxyl component, and based on a crosslinking component, preferably an amino resin, characterised in that
(A) from 10 to 90% by weight, preferably from 18 to 40% by weight, of one or more products of the addition reaction of maleic anhydride with unsaturated oils and/or fatty acids, the maleic anhydride content of said products being between 10 and 30 mol%, preferably between 16 and 27 mol%, and the anhydride groups of said products having been digested by means of water and/or monoalcohols, are condensed with
(B) from 90 to 10% by weight, preferably from 82 to 60% by weight, of one or more water-insoluble, film-forming polyhydroxyl compounds, comprising at least 30% by weight of polycondensation and/or polyaddition products (component B1) which have preferably been modified by means of fatty acids and which contain, per 1000 g, at least 0.5 mol of a substituted urea group (-N-CO-N) and in addition urethane groups, and have an acid number of less than 5 mg of KOH/g, a hydroxyl number of 50 to 300 mg of KOH/g and an intrinsic viscosity of from 8 to 13 ml/g, measured in N,N-dimethylformamide (DMF) at 20°C, and optionally up to a maximum of 70% by weight of polyhydroxyl compounds (component B2) preferably corresponding, with the exception of the presence of substituted urea groups, to component B1,
at from 90 to 150°C to an intrinsic viscosity (DMF/20°C) of between 10 and 20 ml/g, with the proviso that the ratio between the intrinsic viscosities of the polyhydroxyl components and the polycarboxyl components is between 1.4 and 2.7 and the end product contains at least 0.3 mol of substituted urea groups.

**2.** Process according to Claim 1, characterised in that maleate oil components (A) having an intrinsic viscosity (DMF/20°C) of between 4 and 8 ml/g are employed.

**3.** Process according to Claims 1 and 2, characterised in that, as component B1 of the polyhydroxyl compounds, polyester resins are employed which have been optionally modified by means of monocarboxylic acids having 5 to 20 carbon atoms, contain hydroxyl groups and, due to the additional use of secondary alkanolamines and isocyanate compounds, contain urea and urethane groups.

**4.** Process according to Claims 1 and 2, characterised in that, as component B1 of the polyhydroxyl compounds, polymers are employed which are obtained by reacting epoxide/amine compounds, alkanolamines, polyisocyanate compounds and optionally polyols.

6

5. Process according to Claims 1 and 2, characterised in that, as component B2 of the polyhydroxyl compounds, copolymers of hydroxyl-functional (meth)acrylic monomers and other vinyl and/or vinylidene compounds are employed.

6. Use of the binders prepared according to Claims 1 to 5 in combination with phenolic and/or amino resins as a crosslinking component for the formulation of water-thinnable paints, in particular of undercoats (sealer).

**Revendications**

1. Procédé de préparation de liants pour peintures diluables à l'eau à base de produits de condensation partiels d'un composant à base d'huile maléinisée soluble dans l'eau après une neutralisation au moins partielle des groupes carboxyles, en tant que composant polycarboxylé, et d'un composant polyhydroxylé, ainsi que d'un composant de réticulation, de préférence une résine aminée, caractérisé en ce que l'on condense entre 90 et 150°C jusqu'à un indice de viscosité intrinsèque (DMF/20°C) entre 10 et 20 ml/g

A) 10 à 90% en poids, de préférence 18 à 40% en poids d'un ou de plusieurs produits d'addition d'anhydride maléique sur des huiles et/ou des acides gras insaturés dont la fraction anhydride maléique se situe entre 10 et 30% molaire, et dont les groupes anhydrides sont ouverts avec de l'eau et/ou des monoalcools, avec

B) 90 à 10% en poids, de préférence 82 à 60% en poids d'un ou de plusieurs composés polyhydroxylés filmogènes insolubles dans l'eau constitués par au moins 30% en poids de produits de polycondensation modifiés de préférence par des acides gras et/ou de produits de polyaddition (composant B1) qui contiennent, pour 1000 g, au moins 0,5 mole d'un groupe urée substitué (-N-CO-N-) et en outre des groupes uréthanne, présentent un indice d'acide inférieur à 5 mg de KOH/g, un indice d'hydroxyle de 50 à 300 mg de KOH/g et un indice de viscosité intrinsèque de 8 à 13 ml/g, mesuré dans du N,N-diméthylformamide (DMF) à 20°C et, éventuellement, par 70% en poids au maximum de composés polyhydroxylés (composant B2) qui correspondent préférablement, hormis la présence de groupes urée substitués, au composant B1, sous réserve que le rapport des indices de viscosités intrinsèques des composants polyhydroxylés et des composants polycarboxylés se situe entre 1,4 et 2,7 et que le produit final comporte au moins 0,3 mole de groupes urée substitués.

2. Procédé selon la revendication 1, caractérisé en ce qu'on met en oeuvre des composants à base d'huile maléinisée (A) avec un indice de viscosité intrinsèque (DMF/20°C) compris entre 4 et 8 ml/g.

3. Procédé selon les revendications 1 et 2, caractérisé en ce qu'on met en oeuvre, en tant que composant B1 des conposés polyhydroxylés, des résines de polyesters dotées de groupes hydroxyles et modifiées éventuellement par des acides monocarboxyliques ayant 5 à 20 atomes de carbone, qui comportent, du fait de l'emploi supplémentaire d'alcanolamines secondaires et de composés isocyanates, des groupes urée et uréthanne.

4. Procédé selon les revendications 1 et 2, caractérisé en ce qu'on met en oeuvre, en tant que composant B1, des composés polyhydroxylés, des polymères qui sont obtenus par réaction de composés époxy-amine, d'alcanolamines, de composés de polyisocyanate et, le cas échéant de polyols.

5. Procédé selon les revendications 1 et 2, caractérisé en ce qu'on met en oeuvre, en tant que composant B2, des composés polyhydroxylés, des copolymères de monomères (méth)acryliques à fonctionnalité hydroxyle et d'autres composés vinyliques et/ou vinylidéniques.

6. Utilisation des liants préparés selon les revendications 1 à 5 en combinaison avec des résines phénoliques et/ou aminées en tant que composants de réticulation pour la formulation de peintures diluables à l'eau, notamment de peintures pour couches intermédiaires (enduits).